# EUROPEAN PATENT SPECIFICATION

(11) **EP 2 857 846 B1**
(45) Date of publication and mention of the grant of the patent: **13.02.2019**
(21) Application number: 13794114.2
(22) Date of filing: 13.03.2013
(51) Int. Cl.: G01N 35/08, G01N 37/00

(54) **MICROCHIP**
MIKROCHIP
MICROPUCE

(30) Priority: 24.05.2012 JP 2012118407
(43) Date of publication of application: 08.04.2015
(73) Proprietor: Sony Corporation, Tokyo 108-0075 (JP)
(72) Inventor: WATANABE, Hidetoshi, Minato-ku, Tokyo 108-0075 (JP); SEGAWA, Yuji, Minato-ku, Tokyo 108-0075 (JP); KAJIHARA, Junji, Minato-ku, Tokyo 108-0075 (JP); KOJIMA, Kensuke, Minato-ku, Tokyo 108-0075 (JP); WATANABE, Toshio, Minato-ku, Tokyo 108-0075 (JP); MATSUMOTO, Masahiro, Minato-ku, Tokyo 108-0075 (JP)
(74) Representative: D Young & Co LLP
(86) International application number: PCT/JP2013/056950
(87) International publication number: WO 2013/175833

(56) References cited:
- WO-A1-2009/125676
- WO-A1-2009/125676
- WO-A1-2011/099246
- WO-A2-2006/116616
- JP-A- 2004 340 702
- JP-A- 2004 340 702
- JP-A- 2007 010 558
- JP-A- 2007 010 558
- JP-A- 2009 042 103

## Description

### TECHNICAL FIELD

The present technique relates to a microchip. The present technique particularly relates to a microchip provided with an indication region to indicate that filling of a sample solution into an analysis region has been completed.

### BACKGROUND ART

Recently, microfabrication technologies for semiconductor industry have been applied to develop a microchip having an analysis region and a flow channel provided for performing chemical or biological analysis. The analysis region and the flow channel are formed on a silicone substrate or a glass substrate. Such microchip enables an analysis to be performed with a small amount of sample, and also is disposable. Thus the microchip is applied especially to biological analysis which uses a precious and trace sample and a large number of specimens.

An analysis system using such a microchip as above is called micro-Total-Analysis System (µ-TAS), a lab-on-chip, abiochip, and so forth. The analysis system hasbeen receiving attention, being regarded as a technique which makes possible acceleration, high efficiency, integration, and miniaturization of analysis devices in chemical or biological analysis. Micro-TAS is expected to be applied especially to biological analysis which uses a precious and trace sample and a large number of specimens, as it enables an analysis to be performed with a small amount of sample and microchips to be disposable.

In an analysis using a microchip, since a sample is used in a minute amount, it is difficult to introduce a sample solution into an analysis region or a flow channel. Sometimes introduction of a sample solution is hampered or takes time, due to air existing in the inside of a microchip, such as an analysis region.

To facilitate introduction of a solution in a microchip, Patent Document 1, for example, discloses a microchip in which a region for introducing a solution is maintained at a pressure lower than atmospheric pressure. In this microchip, a sample solution is injected with a needle into a region, the inside of which is in a negative pressure state. Then the negative pressure causes a sample solution to be sucked into the region, enabling the sample solution to be introduced into the region easily in a short time.

WO2009125676 discloses an inspection system including a liquid pool for pooling liquid flowing through a liquid channel; liquid detection means for detecting a liquid pooled in the liquid pool; pump drive means for driving a pump; pump drive control means for controlling the pump drive means; and achievement judgment means for judging whether liquid is present according the detection output from the liquid detection means. The pump drive control means controls pump drive according to the judgment made by the achievement judgment means.

JP2007010558 discloses a sensor comprising a sample inlet for introducing samples, a channel, a reaction region for measuring samples, and an air hole for expelling air when samples are introduced. A volume swelling material, which expands in volume when coming into contact with the samples, is provided in the inside or in the vicinity of the air hole.

WO2011099246 discloses a microchip including a substrate structure including a fluid channel configured to contain a sample solution, wherein the fluid channel is maintained at a pressure lower than atmospheric pressure prior to injection of the sample solution into the fluid channel.

JP2004340702 discloses a microchip composed of at least one transparent substrate having a micro-channel constituting a flow channel having a predetermined shape arranged on one surface thereof and a transparent counter substrate for sealing the micro-channel, a light scattering surface having fine unevenness for scattering light formed thereto being provided to at least a part of the inner wall surface of the micro-channel, wherein the presence of a liquid is detected on the basis of the transmitted light of the light scattering surface or the intensity of reflected light.
Prior art includes: WO 2006/116616 A2

### CITATION LIST

### PATENT DOCUMENT

Patent Document 1: JP 2011-163984 A

### SUMMARY OF THE INVENTION

### PROBLEMS TO BE SOLVED BY THE INVENTION

In the case of the above microchip, as an amount of a sample to be introduced is very small, it could be difficult to check, from the outside of the microchip, whether a solution containing the sample has filled up an area in which the sample is analyzed, such as an analysis region. In view of the foregoing, a main objective of the present technique is to provide a microchip which is easy to check, from the outside thereof, whether an analysis region has been filled with a solution.
Particular and preferred aspects of the present invention are set out in the appended claims.

Some examples herein provide a microchip including: an introduction part for introducing a liquid; an analysis region in which a substance contained in the liquid or a reaction product of the substance is analyzed; an indication region to indicate that the analysis region has completely been filled with the liquid; and a flow channel to connect the introduction part, the analysis region, and the indication region. In the microchip, the flow channel is configured in such a manner that an amount of time it takes for the liquid introduced from the introduction part to reach the indication region is longer than an amount of time it takes for the liquid introduced from the introduction part to fill up the analysis region.

In the microchip, the flow channel may include an introduction flow channel which connects the introduction part and the analysis region, and a discharge flow channel which connects the analysis region and the indication region.

The flow channel may include the introduction flow channel which connects the introduction part and the analysis region, and a branch flow channel which diverges from the introduction flow channel to be connected with the indication region. The flow channel may be configured in such a manner that a flow channel length from a communication part, located between the branch flow channel and the introduction flow channel, to the indication region is longer than a flow channel length from the communication part to the analysis region.

Further, the flow channel may include the introduction flow channel which connects the introduction part and the analysis region, and the branch flow channel which diverges from the introduction flow channel to be connected with the indication region. The flow channel maybe configured in such a manner that an introduction pressure of the liquid to be introduced into the branch flow channel is higher than an introduction pressure of the liquid to be introduced into the introduction flow channel, at the communication part between the branch flow channel and the introduction flow channel.

In a microchip according to the present technique, a pigment material may be placed in the indication region. The pigment material may be solid phased.

Furthermore, an uneven structure may be provided on at least one surface constituting the indication region. The uneven structure formed on the one surface may include a surface which is not parallel or is not perpendicular to the one surface.

The microchip may have, in the analysis region thereof, a communication part located between the analysis region and the discharge flow channel. The communication part may be formed at a position opposite to a communication part between the analysis region and the introduction flow channel. The one introduction flow channel may be connected with a plurality of the analysis regions. Also, the plurality of the analysis regions may be connected with the one indication region via the discharge flow channel. The one indication region may be connected with all the analysis regions via the discharge flow channel.

### EFFECTS OF THE INVENTION

According to the present technique, there is provided a microchip provided with an indication region to indicate that filling of a liquid into an analysis region has been completed.

### BRIEF DESCRIPTION OF DRAWINGS

Figs. 1A and 1B are schematic views illustrating a configuration of a microchip 1a according to a first embodiment of the present technique.
Figs. 2A and 2B are schematic partial sectional views illustrating an indication region of the microchip 1a.
Fig. 3 is a schematic partial view illustrating a configuration of a modified embodiment of the microchip 1a.
Fig. 4 is a schematic top view illustrating a configuration of a microchip 1b according to a second embodiment of the present technique.
Fig. 5 is a schematic top view illustrating a configuration of a microchip 1c according to a third embodiment of the present technique.
Fig. 6 is a schematic top view illustrating a configuration of a modified embodiment of the microchip 1c.
Figs. 7A and 7B are schematic partial views illustrating a configuration of a modified embodiment of the microchip 1c.
Fig. 8 is a schematic top view illustrating a configuration of a microchip 1d according to a fourth embodiment of the present technique.
Figs. 9A, 9B and 9C are schematic partial views illustrating a configuration of a modified embodiment of the microchip 1d.

### MODE FOR CARRYING OUT THE INVENTION

The following is a description of preferred embodiments to implement the present technique. The embodiments described below are given to show representative embodiments of the present technique, and the scope of the present technique is not narrowly interpreted thereby. The description will be provided in the following order.
1. Configuration of Microchip according to First Embodiment
   (1) Configuration of microchip 1a
      (1-1) Introduction part
      (1-2) Analysis region
      (1-3) Flow channel
      (1-4) Indication region
         <1> Pigment material
         <2> Uneven structure
   (2) Modified embodiment of microchip 1a
2. Configuration of Microchip according to Second Embodiment
3. Microchip according to Third Embodiment
   (1) Configuration of microchip 1c
   (2) Modified embodiment of microchip 1c
      <1> Microchip 1c-1
      <2> Microchip 1c-2
4. Microchip according to Fourth Embodiment, which is the claimed invention.
   (1) Configuration of microchip 1d
   (2) Modified embodiment of microchip 1d
      <1> Microchip 1d-1
      <2> Microchip 1d-2
      <3> Microchip 1d-3
5. Protection mechanism of Light Transmissive Part
   (1) Contact prevention structure
   (2) Identification markings for light transmissive part
   (3) Indication of holding part
   (4) Protection member for light transmissive part
   (5) Others

### 1. Configuration of Microchip according to First Embodiment

### (1) Configuration of microchip 1a

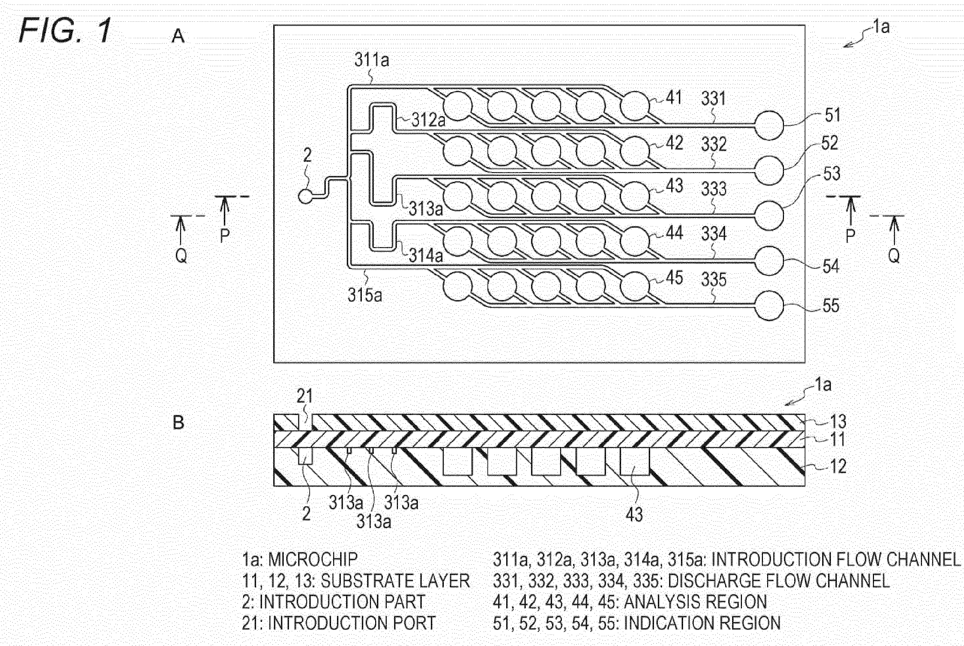

Each of Figs. 1A and 1B is a schematic view illustrating a configuration of a microchip 1a according to a first embodiment of the present technique. Fig. 1A is a top view of the microchip 1a, and Fig. 1B is a sectional view of the microchip 1a taken along the line P-P shown in Fig. 1A. The microchip 1a includes: an introduction part 2 for introducing a liquid such as a sample solution; analysis regions 41 to 45 in which a substance contained in the sample solution or a reaction product of the substance is analyzed; and indication regions 51 to 55 to indicate that the analysis regions 41 to 45 have been completely filled with the sample solution. Furthermore, the introduction part 2 is connected with the analysis regions 41 to 45 via introduction flow channels 311a to 315a. The indication regions 51 to 55 are connected with the analysis regions 41 to 45 via discharge flow channels 331 to 335.

The microchip 1a is formed of three substrate layers 11, 12, 13 (see Fig. 1B). In the substrate layer 12, as exemplified by the P-P section in Fig. 1B, there are formed the introduction part 2, the introduction flow channels 311a to 315a, the discharge flow channels 331 to 335, the analysis regions 41 to 45, and the indication regions 51 to 55. Each component of the microchip 1a will be described below in order. In the meantime, in a microchip according to the present technique, the number of the introduction part 2, the analysis regions 41 to 45, or others, is not limited to the configuration of the microchip 1a shown in Fig. 1A. For example, a plurality of introduction parts may be provided in one microchip. Also, a microchip may have a single introduction part connected with a single introduction flow channel.

### (1-1) Introduction part

A sample solution to be used for an analysis using the microchip 1a is introduced into the introduction part 2. As shown in Fig. 1B, in the microchip 1a, the introduction part 2 is sealed with the substrate layer 11. In the microchip 1a, therefore, introduction of a sample solution into the introduction part 2 may be carried out by using a puncture member such as a needle. To implement the introduction, the puncture member is attached to a syringe or the like loaded with the sample solution. Then a tip of the puncture member is inserted, from the outside of the microchip 1a, to pass through an introduction port 21 formed on a substrate layer 13, and to penetrate the substrate layer 11 to finally reach the introduction part 2. As a result, the inside of the syringe and the introduction part 2 are connected. To facilitate introduction of the sample solution into the introduction part 2 with the puncture member, it is preferable to select an elastic material to form the substrate layer 11.

A sample solution which is introduced into a microchip according to the present technique is an analyte or a solution containing a substance which reacts with another substance to produce an analyte . Examples of the analyte include nucleic acid such as DNA and RNA, peptide, and protein including an antibody and the like. Alternatively, a biological sample containing the above analyte, such as blood, may be used as a sample solution to be introduced into a microchip according to the present technique, either in an unprocessed state or in a dilute solution state.

### (1-2) Analysis region

The sample solution which has been introduced into the introduction part 2 flows through the introduction flow channels 311a to 315a and fills up the analysis regions 41 to 45 arranged in the microchip 1a, and then an analysis is performed on the analyte contained in the sample solution. Examples of analysis method using the microchip 1a includes an analysis method utilizing a nucleic acid amplification reaction, such as a conventional polymerase chain reaction (PCR) method which performs thermal cycling, and various isothermal amplification methods conducted without thermal cycling. A part of a substance required for an analysis may be stored in the analysis regions 41 to 45 in advance. In the following description of the microchip 1a, all five analysis regions connected with the introduction flow channel 311a will be referred to as an analysis region 41. Likewise each group of five analysis regions which is supplied with a sample solution from each of the introduction flow channels 312a, 313a, 314a, and 315a will be referred to as analysis regions 42, 43, 44, and 45, respectively (see Fig. 1A).

### (1-3) Flow channel

The microchip 1a is provided with two kinds of flow channels, i.e., the introduction flow channels 311a to 315a and the discharge flow channels 331 to 335. As shown in Fig. 1A, the introduction flow channels 311a to 315a connect the introduction part 2 and the analysis regions 41 to 45. Also, the discharge flow channels 331 to 335 connect the analysis regions 41 to 45 and the indication regions 51 to 55. Specifically, in the microchip 1a, the one introduction flow channel 311a to 315a is connected with a plurality of analysis regions 41 to 45. Further, the plurality of analysis regions 41 to 45 are connected with the one indication region 51 to 55, via the discharge flow channel.

The sample solution which has been introduced into the microchip 1a from the introduction part 2 flows through the introduction flow channels 311a to 315a, and reaches the analysis regions 41 to 45. Apart of the sample solution having reached the analysis regions 41 to 45 flows through the discharge flow channels 331 to 335 communicated with the analysis regions 41 to 45 to reach the indication regions 51 to 55. Therefore, in the microchip 1a, the analysis regions 41 to 45 have been filled with the sample solution by the time the sample solution flows through the discharge flow channels 331 to 335. In other words, in the microchip 1a, the two kinds of flow channels, i.e., the introduction flow channels 311a to 315a and the discharge flow channels 331 to 335, are configured in such a manner that an amount of time it takes for the sample solution introduced from the introduction part 2 to reach the indication regions 51 to 55 is longer than an amount of time it takes for the sample solution introduced from the introduction part 2 to fill up the analysis regions 41 to 45.

In the microchip 1a, communication parts between the discharge flow channels 331 to 335 and the analysis regions 41 to 45 may be formed at a position opposite to communication parts between the introduction flow channels 311a to 315a and the analysis regions 41 to 45. Such communication parts facing to each other enable the sample solution to fill up the whole analysis regions 41 to 45 before flowing out to the discharge flow channels 331 to 335.

### (1-4) Indication region

The sample solution having passed through the analysis regions 41 to 45 flows through the discharge flow channels 331 to 335, and reaches the indication regions 51 to 55. When the sample solution reaches the indication regions 51 to 55, a user is able to visually recognize that the sample solution has reached the indication regions 51 to 55, by an indication means provided in the indication regions 51 to 55. Examples of the indication means include a pigment material and an uneven structure, which will be described below. As the indication regions 51 to 55 are supplied with the sample solution from the discharge flow channels 331 to 335, the sample solution reaches the indication regions 51 to 55 after the analysis regions 41 to 45 connected with the discharge flow channels 331 to 335 have completely been filled with the sample solution. Therefore, indicating that the sample solution has reached the indication regions 51 to 55 is the same as indicating that filling of the sample solution into the analysis regions has been completed. A method of indication in the indication regions 51 to 55 is described in detail below, taking for example the pigment material and the uneven structure. Incidentally, in order to enable a user to visually recognize, from the outside of the microchip 1a, that the indication regions indicate complete filling of the sample solution, it is preferable to select a light transmissive material for the substrate layers 11, 12, and 13 which form the microchip 1a.

### <1> Pigment material

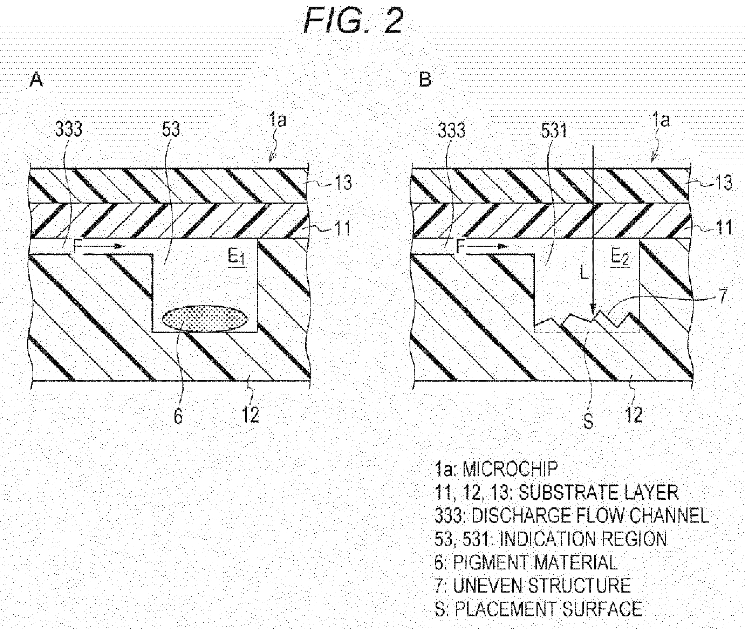

Each of Figs. 2A and 2B is a partial sectional view of the microchip 1a taken along the line Q-Q shown in Fig. 1A. The following is a description of a configuration and of an indication method in the indication region 53, which represents the indication regions 51 to 55 and is shown in Figs. 2A and 2B.

The indication region 53 is connected with the discharge flow channel 333. Specifically, a first end part and a second end part of the discharge flow channel 333 are connected with the analysis region 43 and the indication region 53, respectively (the analysis region 43 is not shown in Figs. 2A and 2B). The sample solution introduced from the introduction part 2 is introduced into the indication region 53, via the discharge flow channel 333, after filling up the analysis region 43 (see an arrow F in Figs. 2A or 2B).

In a space E₁ in the indication region 53, a pigment material denoted by a reference numeral 6 is placed (Fig. 2A) . The pigment material 6 is a material including a pigment which produces a color or changes a color by contact with the sample solution introduced into the space E₁ to become easily visible to a user. Thus, in the indication region 53 shown in Fig. 2A, a change of the pigment material 6, which occurs when the pigment material 6 comes into contact with the sample solution, indicates that the sample solution has reached the indication region 53.

For example, the pigment material 6 may be in a solid phase state . The pigment material 6 which has been solid phased and stored in the indication region 53 dissolves in the sample solution. The sample solution containing the dissolved pigment material 6 diffuses in the space E₁. As a result, the pigment material 6 becomes more visible from the outside of the microchip 1a, compared to when the pigment material 6 is in a solid phase before dissolving in the sample solution. It is also possible to use, as a pigment material 6, a pigment enclosed in a water soluble material. In this pigment material 6, as the pigment is enclosed in the water soluble material, the pigment is not visually recognized by a user before introduction of the sample solution. The water soluble material surrounding the pigment dissolves in the sample solution introduced into the space E₁. Then the pigment diffuses in the space E₁, and the pigment material 6 becomes visible to a user. Other than those mentioned above, a combination of a material incorporating a pigment and a different member or material may be used as a pigment material 6. Such combination is prepared, for example, by applying the material incorporating a pigment to the different member or material. A film to which a water soluble material incorporating a pigment has been applied is an example of the combination.

### <2> Uneven structure

In the indication region 53, an uneven structure 7 may be provided, instead of placing a pigment material 6. Fig. 2B shows a modified embodiment of the indication region 53 (indication region 531). In the indication region 531, an uneven structure 7 is provided on a surface constituting the indication region 531. In the indication region 531, it is indicated that the sample solution has been introduced into the indication region 531, by utilizing reflected light from the uneven structure 7.

The uneven structure 7 may be provided on any surface constituting the indication region 531. At least one uneven structure 7 is provided in the one indication region 531. The uneven structure 7 may be provided on a plurality of surfaces of the indication region 531. A user observes the indication region 531 from a position opposite to a placement surface S on which the uneven structure 7 is provided. In the uneven structure 7 shown in Fig. 2B, a user is assumed to observe the indication region 531 from the direction of the substrate layer 12 or the substrate layer 13. Additionally, the uneven structure 7 preferably includes a surface which is not parallel or is not perpendicular to the placement surface S. As shown in Fig. 2B, the uneven structure 7 may be formed as a part of the substrate layer 12. Alternatively, the uneven structure 7 may be formed independently to be mounted on a surface constituting the indication region 531.

Light is reflected or is refracted, at an interface between media differing in a refractive index, when proceeding at an incident angle other than a right angle with respect to a surface of the interface. For example, when glass (soda lime) is selected to form the substrate layer 12 forming the microchip 1a, a refractive index of light at a wavelength of 589.3 nm is approximately 1.52 (glass) . On the other hand, a refractive index of air existing in a space E₂ in the indication region 531 is approximately 1.00.

The uneven structure 7 includes a surface which is not parallel or is not perpendicular to the placement surface S. Therefore, part of light incident on the uneven structure 7 from the direction of the space E₂ is reflected at an interface between the space E₂ and the uneven structure 7 (see an arrow L in Fig. 2B). Meanwhile, part of light coming to the space E₂ from the uneven structure 7 is also reflected. Therefore, light reflected at the interface between the uneven structure 7 and the space E₂ is visible to a user observing the indication region 531 from the direction of the substrate layer 12 or the substrate layer 13. When angles of faces of the uneven structure 7 are random as shown in Fig. 2B, light incident, at various angles, on the interface between the space E₂ and the uneven structure 7 produces scattering light, which is visually recognized by a user. At this time, the indication region 531 looks, for example, as if it became turbid in white.

In the indication region 531, as with the indication region 53 in which the pigment material 6 is placed as shown in Fig. 2A, a sample solution is introduced from the discharge flow channel 333 (see an arrow F in Fig. 2B). When the sample solution is introduced, the space E₂ in the indication region 531 is filled with the sample solution which replaces air. The refractive index of water is approximately 1.33. Therefore, when the refractive index of the sample solution is close to that of water, the difference of refractive index between the uneven structure 7 and the space E₂ is reduced, compared to the aforementioned state where air exists in the space E₂. A light reflectance at an interface between two media increases as the difference of refractive index between the media becomes larger. Accordingly, the sample solution introduced into the indication region 531 decreases light reflected at the interface between the uneven structure 7 and the space E₂. This means there is less scattering light a user visually recognizes. As a consequence, a user is able to distinguish, by observing the indication region 531, between before and after an introduction of the sample solution into the indication region 531. In other words, the indication region 531 indicates that the sample solution has reached the space E₂ via the uneven structure 7.

The above described change which occurs in the indication region 53, 531, caused by the pigment material 6 or the uneven structure 7, may be detected by using a detector such as a photodetector, instead of being detected visually by a user. A light source and the detector are placed in a position opposite to the placement surface S on which the pigment material 6 or the uneven structure 7 is placed, so as to interpose the indication region 53, 531. Then, for example, a change of the pigment material 6, due to an introduction of the sample solution into the indication region 53, may be detected by a detection section in a form of a change in an absorbance of light emitted from the light source. It is also possible to utilize a change of light emission or a light wavelength for an indication in the indication region, by using the pigment material 6 containing a fluorescent pigment. When the indication region 531 has the uneven structure 7, the detection section may detect a change of light reflectance at the interface between the space E₂ and the uneven structure 7 in a form of a change in a quantity of incident light. In regard to light emitted from the light source to the uneven structure 7, it is preferable to select only light orthogonal to the placement surface S, by using a polarizer or the like.

The light source and the detector mentioned above may be provided in an analysis device. Such analysis device has, for example, an optical system used for an analysis of a substance contained in a sample solution, a heating section for heating of the sample solution necessary for an analysis, and a display section for displaying a result of the analysis. The analysis device may be configured in such a manner that the analysis device starts an analysis when the detector in the analysis device detects a change in the indication region 53, 531 in the microchip 1a according to the present technique.

In the microchip 1a according to the first embodiment of the present technique, the indication regions 51 to 55 are connected with the introduction part 2 via the analysis regions 41 to 45. With this configuration, the sample solution introduced from the introduction part 2 reaches the indication regions 51 to 55 after the sample solution has filled up the analysis regions 41 to 45. Therefore, detecting the sample solution in the indication regions 51 to 55 is the same as detecting the completion of filling of the sample solution into the analysis regions 41 to 45. In the indication regions 51 to 55, there are placed, for example, the pigment materials 6 or the uneven structures 7, in order to indicate to the outside of the microchip 1a an introduction of the sample solution. Therefore, a change in the indication regions 51 to 55 is readily visible from the outside of the microchip 1a through visual observation by a user or a detector.

The indication regions 51 to 55 provided in the microchip 1a facilitate confirming that the sample solution has been introduced into the analysis regions 41 to 45. This prevents starting an analysis before introducing the sample solution into the analysis regions 41 to 45, or prevents delaying an analysis needlessly. In consequence, the microchip 1a makes it possible to start an analysis of a sample solution at the right time, enabling a convenient and highly accurate analysis .

Furthermore, in the microchip 1a, the one introduction flow channel 311a to 315a is connected with the plurality of analysis regions 41 to 45, and the analysis regions 41 to 45 are connected with the one indication region 51 to 55 via the discharge flow channels 331 to 335. In other words, the indication regions 51 to 55 are provided to the analysis regions 41 to 45 in an individual manner. Therefore, it is possible to identify an analysis region which has not been filled with the sample solution by checking the indication regions 51 to 55, when any one of the introduction flow channels 311a to 315a is blocked by an air bubble or the like which has entered therein. Accordingly, in the microchip 1a, it is possible to eliminate any of the analysis regions 41 to 45 which has not been filled with the sample solution from the analysis regions to be analyzed. As a result, an analysis using the microchip 1a increases in accuracy.

When a substance held in the analysis regions 41 to 45 in the microchip 1a is optically analyzed, it is preferable to select, for the substrate layers 11, 12, 13, a material which is light transmissive and capable of reducing optical errors with low wavelength dispersion and low autofluorescence. The substrate layer 11, 12, 13 may be formed of glass and plastic of various kinds. Preferably, an elastic material is used for the substrate layer 11, and a gas impermeable material is used for the substrate layers 12, 13. The substrate layer 11 formed of an elastic material makes it easy for the sample solution to be introduced into the introduction part 2 in a previously described manner. Besides, the substrate layers 12, 13 formed of a gas impermeable material prevent the sample solution introduced into the analysis regions 41 to 45 from vaporizing by heating and so on, and from passing through the substrate layer 11 to dissipate (liquid escape).

Examples of material for the substrate layer having elasticity include silicone-based elastomer such as polydimethylsiloxane (PDMS), as well as acrylic elastomer, urethane-based elastomer, fluoroelastomer, styrenic elastomer, epoxy elastomer, and natural rubber.

For the substrate layer having gas impermeability, material such as glass, plastic, metal, and ceramic can be used. Examples of the plastic include polymethyl methacrylate (PMMA: acrylic resin) and polycarbonate (PC). Examples of the metal include aluminum, copper, stainless steel (SUS), silicon, titanium, and tungsten. Examples of the ceramic include alumina (Al₂O₃), aluminum nitride (AlN), silicon carbide (SiC), titanium oxide (TiO₂), zirconium oxide (ZrO₂), and quartz.

The introduction part 2, the introduction flow channels 311a to 315a and others are formed on the substrate layer 12 by a publicly known method, such as wet etching or dry etching for a glass substrate layer, or nanoimprinting, injection molding, or cutting for a plastic substrate layer. The introduction part 2, the introduction flow channels 311a to 315a, and others may also be formed on the substrate layer 11. It is also possible that some of the above part, channels, and others are formed on the substrate layer 11, while the rest are formed on the substrate layer 12.

Bonding of the substrate layers 11, 12, and 13 is accomplished by a known method such as thermal fusion bonding, bonding using an adhesive, anodic bonding, bonding using a pressure-sensitive adhesive sheet, plasma activation bonding, and ultrasonic bonding. Furthermore, bonding of the substrate layer 12 including the introduction part 2 and the substrate layer 11 can be performed under negative pressure with respect to atmospheric pressure, so that a space inside the microchip 1a into which a sample solution is to be introduced may be kept at a negative pressure to atmospheric pressure (for example, 1/100 atm). In the case of the aforementioned introduction of a sample solution into the microchip 1a, which is performed by using a puncture member, if the inside of the microchip 1a is kept at a negative pressure to atmospheric pressure, the sample solution in the syringe is sucked automatically into the introduction part 2 via the puncture member, due to pressure difference from the outside of the microchip (the inside of the syringe).

### (2) Modified embodiment of microchip 1a

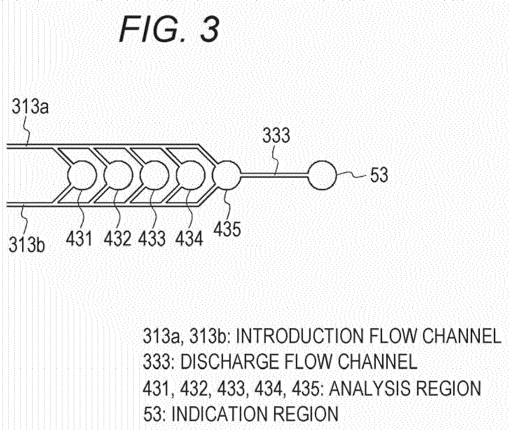

Fig. 3 illustrates schematically a configuration of a modified embodiment of the microchip 1a (a microchip 1a-1). Analysis regions 431 to 435 represent the above modified embodiment. The analysis regions denoted by reference numerals 431 to 435 are supplied with the sample solution from the common introduction flow channels 331a, 331b. The analysis regions 431 to 435 are arranged in ascending order of distance from the introduction part 2. The microchip 1a-1 is in the same configuration as the microchip 1a, other than the analysis regions, the introduction flow channels, and discharge flow channels. Other component portions having the same configuration as the microchip 1a are denoted by the same reference numerals as the microchip 1a, and will not be described below.

As shown in Fig. 3, the analysis regions 431 to 435 are connected with the two introduction flow channels 313a, 313b to introduce a sample solution. Each of the introduction flow channels 313a, 313b is connected with the introduction part 2, at an end part thereof which is not connected with the analysis regions 431 to 435 (the introduction part 2 is not shown in Fig. 3). Providing the two introduction flow channels 313a, 313b to the analysis regions makes it possible for the sample solution to flow through at least one of the introduction flow channels to be surely introduced into the analysis regions 431 to 435, even if the other introduction flow channel is blocked by an air bubble which has accidentally entered therein or by any other reasons.

The indication region 53 in the microchip 1a-1 is connected with only one analysis region 435, via the discharge flow channel 333. The analysis region 435 with which the discharge flow channel 333 is connected is located farthest from the introduction part 2, among analysis regions 431 to 435 which are supplied with the sample solution from the same introduction flow channels 313a, 313b. This means, when filling of the analysis region 435 with the sample solution is completed, the other analysis regions 431 to 434 have already been filled with the sample solution. Therefore, with the configuration of the microchip 1a-1 shown in Fig. 3, in which only one analysis region 435 is connected with the indication region 53, it is possible to confirm that the sample solution has completely filled up all the analysis regions 431 to 435 connected with the common introduction flow channels 313a, 313b, by detecting an introduction of the sample solution into the indication region 53.

### 2. Configuration of Microchip according to Second Embodiment

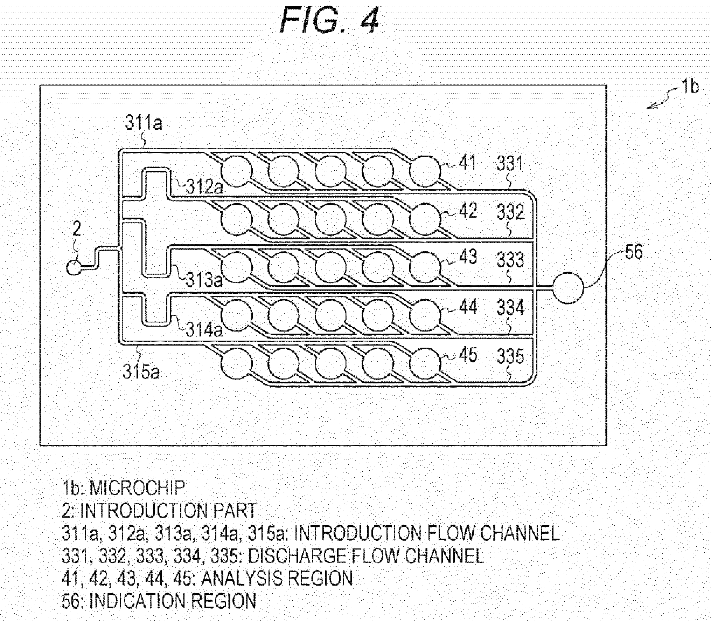

Fig. 4 is a schematic top view illustrating a configuration of a microchip 1b according to a second embodiment of the present technique. The microchip 1b is in the same configuration as the first embodiment, other than an indication region 56. Other component portions having the same configuration as the first embodiment are denoted by the same reference numerals as the first embodiment, and will not be described below. Additionally, multiple substrate layers forming the microchip 1b are the same as the substrate layers 11, 12, 13 described in the first embodiment.

In the microchip 1b, one introduction flow channel 311a to 315a is connected with a plurality of analysis regions 41 to 45. Further, the one indication region 56 is connected with all the analysis regions 41 to 45 arranged in the microchip 1b, via discharge flow channels 331 to 335. In short, the microchip 1b has the single indication region 56. A sample solution introduced from an introduction part 2 flows through the introduction flow channels 311a to 315a, fills up the analysis regions 41 to 45, then flows through the discharge flow channels 331 to 335 to be introduced into the indication region 56. Hence, in the microchip 1b, an amount of time it takes for the sample solution introduced from the introduction part 2 to reach the indication region 56 is longer than an amount of time it takes for the sample solution introduced from the introduction part 2 to fill up the analysis regions 41 to 45.

The indication region 56 in the microchip 1b has a pigment material 6 or an uneven structure 7 therein, both described in the first embodiment. Therefore, the indication region 56, like the indication regions 51 to 55 in the first embodiment, has a function of indicating that filling of the sample solution into the analysis regions 41 to 44 has been completed.

It is sufficient that at least one indication region according to the present technique is provided to one microchip. With the single indication region 56, it is possible to reduce an amount of the sample solution to be introduced into the microchip 1b. Moreover, when a light source and a detector are used to detect a change in the indication region 56, configurations of the light source and the detector are able to be simplified, by reducing the number of the indication regions 56. Further, it is desirable to configure the microchip in such a manner that lengths of the individual discharge flow channels 331 to 335 connected with the single indication region 56 are equal to one another, in terms of a distance between the indication region 56 and the analysis regions 41 to 45 farthest from the introduction part 2 connected with each of the introduction flow channels 311a to 315a.

### 3. Microchip according to Third Embodiment

### (1) Configuration of microchip 1c

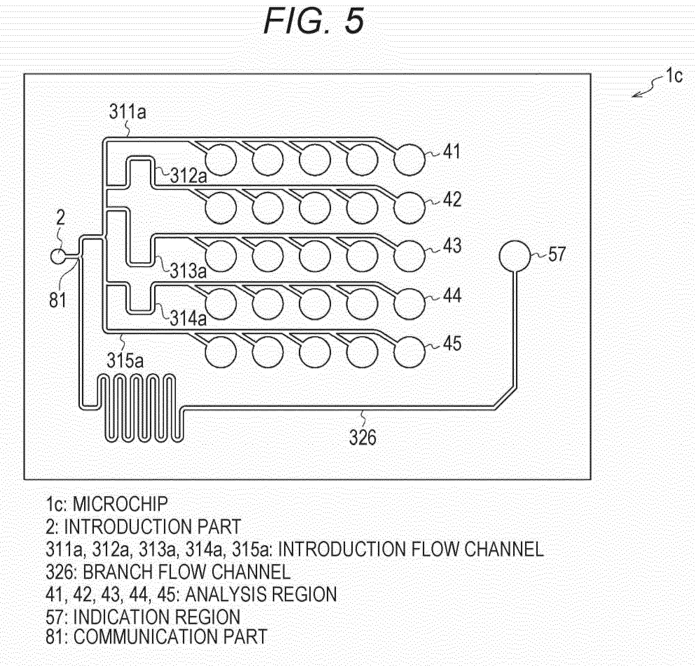

Fig. 5 is a schematic top view illustrating a configuration of a microchip 1c according to a third embodiment of the present technique. The microchip 1c is in the same configuration as the first embodiment, other than a branch flow channel 326. Other component portions having the same configuration as the first embodiment are denoted by the same reference numerals as the first embodiment, and will not be described below. Additionally, multiple substrate layers forming the microchip 1c are the same as the substrate layers 11, 12, 13 described in the first embodiment.

As shown in Fig. 5, in the microchip 1c, there are provided two kinds of flow channels, i.e., introduction flow channels 311a to 315a and the branch flow channel 326. The introduction flow channels 311a to 315a connect an introduction part 2 and analysis regions 41 to 45. The branch flow channel 326 diverges from the introduction flow channels 311a to 315a and is connected with an indication region 57. A portion of a sample solution introduced into the introduction part 2 in the microchip 1c flows through the introduction flow channels 311a to 315a to reach the analysis regions 41 to 45. Another portion of the sample solution introduced into the introduction part 2 flows to the branch flow channel 326 via a communication part 81 between the introduction flow channels 311a to 315a and the branch flow channel 321, to reach the indication region 57. In the microchip 1c, a flow channel length from the communication part 81 between the branch flow channel 326 and the introduction flow channels 311a to 315a to the indication region 57 is longer than a flow channel length from the communication part 81 to the indication region 41 to 45. Therefore, an amount of time it takes for the sample solution introduced from the introduction part 2 to reach the indication region 57 is longer than an amount of time it takes for the sample solution introduced from the introduction part 2 to fill up the analysis regions 41 to 45. Consequently, it is possible to confirm that the sample solution has completely filled up the analysis regions 41 to 45, by detecting an introduction of the sample solution into the indication region 57. The indication region 57 has, as in the case of the first embodiment, a pigment material 6 or an uneven structure 7 therein. This facilitates observing, from the outside of the microchip 1c, an introduction of the sample solution into the indication region 57.

The microchip 1c is configured such that the flow channel length of the branch flow channel 326 from the communication part 81 is longer than the flow channel length of each of the introduction flow channels 311a to 315a from the communication part 81. With this configuration, the sample solution is introduced into the indication region 57 at a proper time after the analysis regions 41 to 45 have been filled with the sample solution. This enables a user to start analysis operations soon after confirming the indication region 57. Furthermore, in the microchip 1c, there are no discharge flow channels 331 to 335 to be connected with the analysis regions 41 to 45, which eliminates concern that the sample solution introduced into the analysis regions 41 to 45 partially flows out to the discharge flow channels 331 to 335. Specifically, for example, when some part of substance necessary for an analysis is stored in the analysis regions 41 to 45 in advance, the microchip 1c having the branch flow channel 326 is suitable, because such configuration thereof avoids a possibility that amounts of the stored substance become uneven among the analysis regions 41 to 45.

In addition, in the microchip 1c, the introduction flow channels 311a to 315a and the branch flow channel 326 may be configured in such a manner that an introduction pressure of the sample solution to be introduced into the branch flow channel 326 is higher than an introduction pressure of the sample solution to be introduced into the introduction flow channels 311a to 315a, at the communication part 81 between the branch flow channel 326 and the introduction flow channels 311a to 315a. For example, a diameter of the branch flow channel 326 can be formed to be smaller than diameters of the introduction flow channels 311a to 315a, in order to obtain different introduction pressures of the sample solution between the branch flow channel 326 and the introduction flow channels 311a to 315a. As a result of difference in introduction pressure of the sample solution between the introduction flow channels 311a to 315a and the branch flow channel 326, an amount of time it takes for the sample solution introduced from the introduction part 2 to reach the indication region 57 is longer than an amount of time it takes for the sample solution introduced from the introduction part 2 to fill up the analysis regions 41 to 45.

### (2) Modified embodiment of microchip 1c

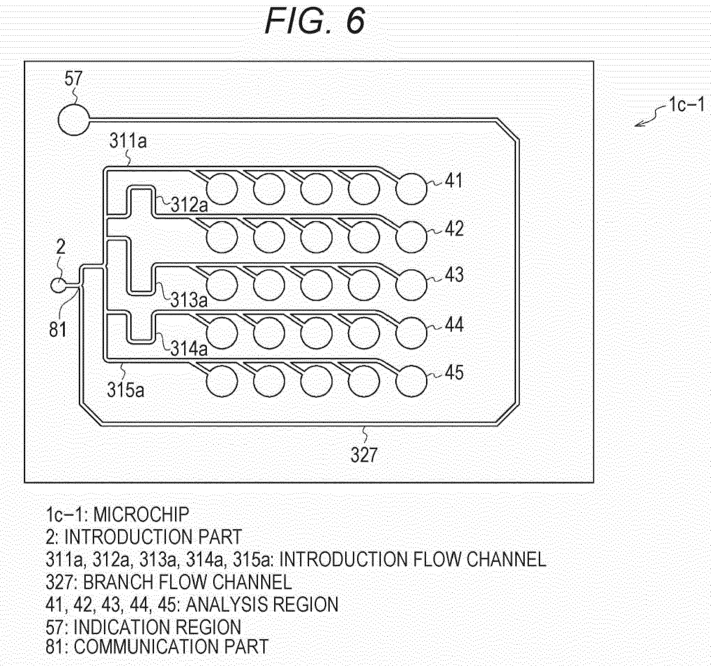

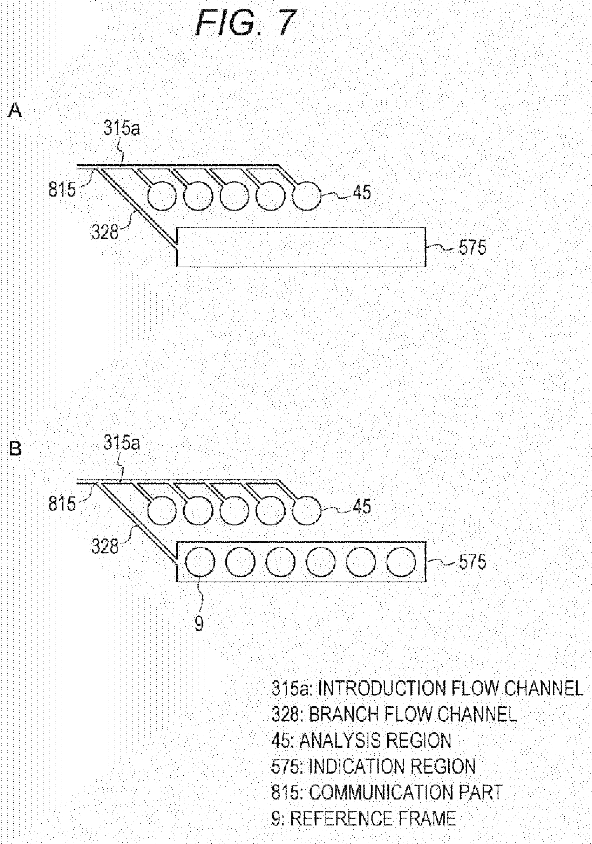

Figs. 6 and 7 illustrate schematically a modified embodiment of the microchip 1c. The modified embodiment of the microchip 1c differs from the microchip 1c, only in terms of configurations of branch flow channels 327, 328, an indication region 575, and a communication part 815. Other component portions having the same configuration as the microchip 1c are denoted by the same reference numerals as the microchip 1c, and will not be described below.

### <1> Microchip 1c-1

Fig. 6 is a schematic top view of a microchip 1c-1 which is one of the modified embodiments of the microchip 1c. In the microchip 1c-1, the branch flow channel 327 is connected, at a first end part thereof, with the introduction flow channels 311a to 315a to form a communication part 81, while being connected at a second part thereof with the indication region 57. The flow channel length of the branch flow channel 327 is longer than lengths of each of the introduction flow channels 311a to 315a from the communication part 81 to the analysis regions 41 to 45 farthest from the introduction part 2. With this configuration, as in the case of the microchip 1c, it is possible for the indication region 57 to indicate that filling of a sample solution into the analysis regions 41 to 45 has been completed. As shown in Fig. 6, the indication region 57 may be situated in a corner part of the microchip 1c-1. In a microchip according to the present technique, the indication region 57 is not limited in location in which it is situated.

### <2> Microchip 1c-2

Fig. 7A illustrates schematically a configuration of a modified embodiment of the microchip 1c (a microchip 1c-2). The analysis region 45 represents the above modified embodiment. In the microchip 1c-2, after the introduction flow channels 311a to 315a diverges from one another corresponding to the analysis regions 41 to 45, the communication part 815 is formed between the introduction flow channel 315a and a branch flow channel 328. Even if the communication part 815 is formed between the branch flow channel 328 and only one of the introduction flow channels 311a to 315a, as long as a flow channel length of the branch flow channel 328 is longer than a flow channel length of the introduction flow channel 315a from the communication part 815 to the analysis regions 41 to 45, the communication part 815 may be formed at any position in the introduction flow channels 311a to 315a.

An indication region 575 is formed in a rectangle shape. The indication region 575 is oriented substantially longitudinally parallel to the introduction flow channel 315a connected with the analysis region 45. For example, pigment materials 6 may be arranged in the indication region 575, so as to form a row parallel to the indication region 575 in the longitudinal direction thereof. In the above indication region 575, color appears in the pigment materials 6 in order of distance from the branch flow channel 328 from the closest to the farthest (the pigment materials 6 are not shown in Figs. 7A and 7B). By deciding the capacity of the indication region 575 in such a manner that a progress speed of color appearance in the pigment materials 6 in the longitudinal direction approximates a flow speed of a sample solution flowing through the introduction flow channel 315a, it is possible for the indication region 575 to indicate the progress state of introducing the sample solution into the analysis region 45. If the sample solution is introduced into the analysis regions 41 to 44 at the same flow speed as that of the sample solution introduced into the analysis region 45, it is also possible for the indication region 575 to indicate the progress state of introducing the sample solution into the analysis regions 41 to 44. In the microchip 1c-2, the uneven structure 7 may be provided in the indication region 575, inplaceof the pigment materials 6.

As shown in Fig. 7B, for example, reference frames 9 may be drawn on a substrate layer surface forming an exterior surface of the microchip 1c-2. The reference frames 9 are arranged so as to individually correspond to each of the pigment materials 6. In each of the pigment materials 6, color appears when each corresponding analysis region 45 has completely been filled with the sample solution. With the reference frames 9, a user is able to check easily the progress state of introducing the sample solution into the analysis region 45, from the outside of the microchip 1c-2.

### 4. Microchip according to Fourth Embodiment, which is the claimed invention.

### (1) Configuration of microchip 1d

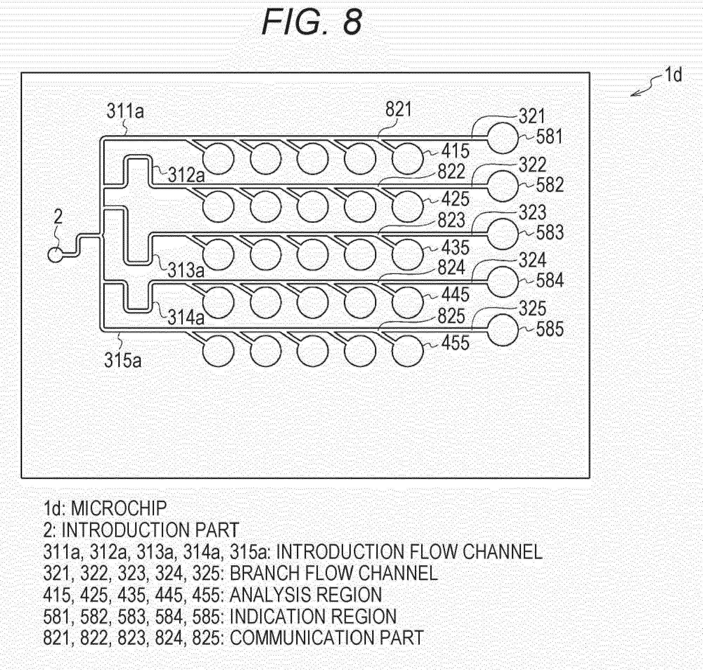

Fig. 8 is a schematic top view of a microchip 1d according to a fourth embodiment of the present technique . The microchip 1d is in the same configuration as the third embodiment, other than branch flow channels 321 to 325 and communication parts 821 to 825. Other component portions having the same configuration as the third embodiment are denoted by the same reference numerals as the third embodiment, and will not be described below. Additionally, multiple substrate layers forming the microchip 1d are the same as the substrate layers 11, 12, 13 described in the first embodiment. In Fig. 8, analysis regions denoted by reference numerals 415 to 455 are single analysis regions located farthest from an introduction part 2 among analysis regions supplied with the sample solution from the common introduction flow channel 311a to 315a.

In the microchip 1d, there are provided two kinds of flow channels, i.e., the introduction flow channels 311a to 315a and a plurality of the branch flow channels 321 to 325. The introduction flow channels 311a to 315a connect the introduction part 2 and the analysis regions including the analysis regions 415 to 455. The branch flow channels 321 to 325 diverge from the introduction flow channels 311a to 315a to be connected with the indication regions 581 to 585. The branch flow channels 321 to 325 are connected with the indication regions 581 to 585, respectively. A sample solution introduced into the introduction part 2 flows through the introduction flow channels 311a to 315a, then, at the communication parts 821 to 825, flows partially to the branch flow channels 321 to 325 to reach the indication regions 581 to 585. In the microchip 1d, flow channel lengths of the introduction flow channels 311a to 315a from the communication parts 821 to 825 to the analysis regions 415 to 455 located farthest from the introduction part 2 are shorter than the flow channel lengths of the branch flow channels 321 to 325. Therefore, the sample solution reaches the indication regions 581 to 585 after the sample solution has completely filled up the analysis regions 415 to 455. In the indication regions 581 to 585, as in the case of the first embodiment, a pigment material 6 or an uneven structure 7 is provided. This facilitates observing, from the outside of the microchip 1d, an introduction of the sample solution into the indication regions 581 to 585.

In the microchip 1d, the introduction flow channels 311a to 315a are connected individually, via the branch flow channels 321 to 325, with the indication regions 581 to 585. With this configuration, when any one of the introduction flow channels 311a to 315a is blocked, the indication regions 581 to 585 make it possible to identify which introduction flow channel has been blocked. Thus, it is possible to make an analysis excluding an analysis result obtained from an analysis region which has not been filled with the sample solution. As a result, an analysis with high accuracy is achieved by the microchip 1d.

### (2) Modified embodiment of microchip 1d

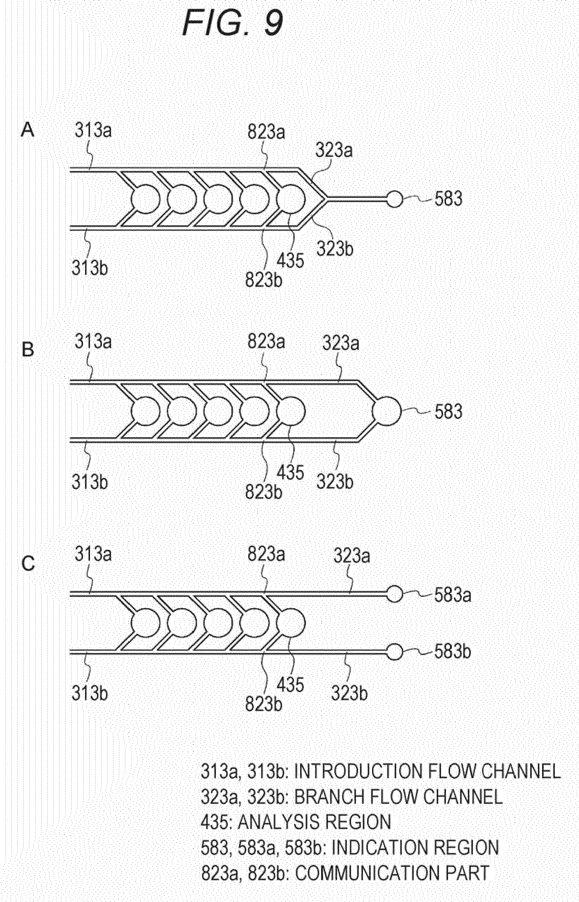

Figs. 9A, 9B and 9C illustrate schematically modified embodiments of the microchip 1d. In the following description, an analysis region 43 represents the modified embodiments (1d-1, 1d-2, 1d-3) of the microchip 1d. The microchips 1d-1 to 1d-3 are in the same configuration as the microchip 1d, other than the introduction flow channels 311a to 315a. Other component portions having the same configuration as the microchip 1d are denoted by the same reference numerals as the microchip 1d, and will not be described below.

### <1> Microchip 1d-1

Fig. 9A illustrates a configuration of the microchip 1d-1. In the microchip 1d-1, two introduction flow channels 313a, 313b are connected with the analysis regions including the analysis region 435. Further, the introduction flow channels 313a, 313b are connected with branch flow channels 323a, 323b, respectively. With this configuration, even when one of the introduction flow channels is blocked by an air bubble or the like, the sample solution is able to flow through the other introduction flow channel to be introduced into the analysis regions including the analysis region 435. This ensures that the sample solution is introduced into the analysis regions including the analysis region 435.

### <2> Microchip 1d-2

Fig. 9B illustrates a configuration of the microchip 1d-2. In the microchip 1d-1 shown in Fig. 9A, the branch flow channels 323a, 323b converge into one branch flow channel to be connected with the analysis region 583. On the other hand, the branch flow channels 323a, 323b in the microchip 1d-2 are individually connected with the indication region 583. In the microchip 1d, multiple branch flow channels 321 to 325 may be connected with the corresponding indication region 581 to 585 after converging. Alternatively, the multiple branch flow channels 321 to 325 may be connected directly and independently with the corresponding indication region 581 to 583. Additionally, as shown in Figs. 9A and 9B, in a microchip according to the present technique, the indication region is not limited in capacity and surface area.

### <3> Microchip 1d-3

Fig. 9C illustrates a configuration of the microchip 1d-3. In the microchip 1d-3, indication regions 583a, 583b are connected with the branch flow channels 323a, 323b, respectively. Further, the indication regions 583a, 583b are connected, via the branch flow channels 323a, 323b, with the introduction flow channels 313a, 313b in an individual manner. Therefore, when one of the introduction flow channels is blocked, the indication regions 583a, 583b make it possible to identify which introduction flow channel has been blocked.

### 5. Protection Mechanism of Light Transmissive Part

In respect to the above described microchip according to each embodiment of the present technique, when a substance held in an analysis region is optically analyzed, it is desirable for a user to touch the microchip avoiding a light transmissive part, which is located on a substrate layer forming an exterior surface of the microchip, and through which light from an analysis region passes. The light transmissive part, located on the exterior surface of the microchip, is a part through which light from the analysis region passes. For example, fluorescent light and luminescence, both originating from a substance held in the analysis region, and transmitted light from the analysis region pass through the light transmissive part, when the lights are incident on a detector or the like. Therefore, if dirt such as fingerprints of a user adheres to this part, an error could be caused in measurement of the light from the analysis region, reducing an accuracy of an analysis using the microchip . For this reason, the microchip according to the present technique may be provided with a protection mechanism to protect the light transmissive part from dirt such as fingerprints of a user. The protection mechanism is described in the following (1) to (5).

### (1) Contact prevention structure

In the microchip according to each embodiment of the present technique, a contact prevention structure may be provided on an exterior surface of the microchip, in order to keep fingers of a user away from the light transmissive part when the user holds the microchip in his/her hand. For example, fingers of the user are kept away from the light transmissive part, even when the user holds the microchip in his/her hand, by forming the light transmissive part, in the substrate layer, to be a recess which is depressed from the surrounding area.

### (2) Identification markings for light transmissive part

In the microchip according to each embodiment of the present technique, the exterior surface of the microchip may be configured to make it easy for a user to distinguish the light transmissive part from other parts. For example, the exterior surface of the microchip other than the light transmissive part may have a pattern or color, or maybe embossed or overlaid with a different member or material so as to be opaque. As a result, the light transmissive part becomes easily recognizable for a user. It is sufficient that the exterior surface of the microchip is colored partially. For example, only an area around the light transmissive part may be encircled with characters, symbols and the like, to draw attention of a user.

### (3) Indication of holding part

In the microchip according to each embodiment of the present technique, the microchip may be configured to indicate a holding part thereof to a user in advance. For example, in a substrate layer, a part which a user is allowed to hold maybe depressed or protruded from the surrounding area. Also, a symbol or a character representing a finger may be printed on the part which a user is allowed to hold such that the user understands that he/she is allowed to hold the part. With the holding part as above, a user becomes more aware of holding the holding part when handling the microchip, which prevents the user from touching the light transmissive part with a fingertip.

### (4) Protection member for light transmissive part

In the microchip according to each embodiment of the present technique, the light transmissive part on an exterior surface of the microchip may be protected with another member or material until an analysis is started. For example, a film-type protection material is laminated over the light transmissive part, so as to prevent fingerprints and the like from adhering to the light transmissive part. In this case, it is desirable to remove the protection member marked by dirt such as fingerprints from the microchip before an analysis is started.

### (5) Others

In the microchip according to each embodiment of the present technique, in order to prevent fingerprints from adhering to the light transmissive part, a protection material resistant to fingerprint may be provided on an exterior surface of the microchip, as a protection mechanism of the light transmissive part. Examples of such protection members include a fingerprint-proof film which is available on the market. Alternatively, a microchip may be held in a case to prevent fingerprints and the like from adhering to the light transmissive part. It is preferable that the case which holds the microchip is formed so as to prevent a user from accidentally touching the light transmissive part when taking out the microchip from the case. For example, an opening may be formed in a part of the case in advance, in such a manner that only the holding part is exposed to the outside of the case. Such a case as above makes it easy for a user to recognize the holding part of the microchip, preventing the user from holding the light transmissive part. As another option, the case may be formed in such a manner that, when the case is opened, an opened part thereof is in such shape and size that a user is able to hold only a predetermined part of the microchip which has been held in the case. Further, the light transmissive part may be provided with a member which indicates to a user that the user has touched a finger to the light transmissive part, by reacting to pressure or heat from the finger of the user when the finger contacts the light transmissive part. By enabling a user to recognize that the user has touched the light transmissive part, it is possible to eliminate an analysis region which could cause an error in an optical analysis.

The following configuration is also obtained by the present technique.
(1) Amicrochip including: an introduction part for introducing a liquid; an analysis region in which a substance contained in the liquid or a reaction product of the substance is analyzed; an indication region to indicate that the analysis region has completely been filled with the liquid; and a flow channel to connect the introduction part, the analysis region, and the indication region. In the microchip, the flow channel is configured in such a manner that an amount of time it takes for the liquid introduced from the introduction part to reach the indication region is longer than an amount of time it takes for the liquid introduced from the introduction part to fill up the analysis region.
(2) In the microchip as in (1), the flow channel includes an introduction flow channel which connects the introduction part and the analysis region, and a discharge flow channel which connects the analysis region and the indication region.
(3) In the microchip as in (1), the flow channel includes the introduction flow channel which connects the introduction part and the analysis region, and a branch flow channel which diverges from the introduction flow channel to be connected with the indication region. The flow channel is configured in such a manner that a flow channel length from a communication part, located between the branch flow channel and the introduction flow channel, to the indication region is longer than a flow channel length from the communication part to the analysis region.
(4) In the microchip as in (1), the flow channel includes the introduction flow channel which connects the introduction part and the analysis region, and the branch flow channel which diverges from the introduction flow channel to be connected with the indication region. The flow channel is configured in such a manner that an introduction pressure of the liquid to be introduced into the branch flow channel is higher than an introduction pressure of the liquid to be introduced into the introduction flow channel, at the communication part between the branch flow channel and the introduction flow channel.
(5) In the microchip as in any one of (2) to (4), a pigment material is placed in the indication region.
(6) In the microchip as in (5), the pigment material is solid phased.
(7) In the microchip as in any one of (2) to (4), an uneven structure is provided on at least one surface constituting the indication region.
(8) In the microchip as in (7), the uneven structure formed on the one surface includes a surface which is not parallel or is not perpendicular to the one surface.
(9) In the microchip as in (2), the analysis region has a communication part between the analysis region and the discharge flow channel at a position opposite to a communication part between the analysis region and the introduction flow channel.
(10) In the microchip as in (9), the one introduction flow channel is connected with a plurality of the analysis regions .
(11) In the microchip as in (10), the plurality of the analysis regions is connected with the one indication region via the discharge flow channel.
(12) In the microchip as in (10), the one indication region is connected with all the analysis regions via the discharge flow channel.

### INDUSTRIAL APPLICABILITY

In a microchip according to the present technique, with an indication region, it is possible to confirm easily that a sample solution has completely filled up an analysis region. Therefore, by the microchip according to the present technique, an analysis is able to be started as soon as filling of the sample solution is completed. This enables an analysis with high accuracy. Hence, the microchip can be used for diagnosis of disease and judgment of contagium in the fields of medicine, public health, and so forth.

### REFERENCE SIGNS LIST

1a, 1b, 1c, 1c-1, 1d Microchip
11, 12, 13 Substrate layer
2 Introduction part
21 Introduction Port
311a, 312a, 313a, 313b, 314a, 315a Introduction flow channel
321, 322, 323, 323a, 323b, 324, 325, 326, 327, 328 Branch flow channel
331, 332, 333, 334, 335 Discharge flow channel
41, 415, 42, 425, 43, 431, 432, 433, 434, 435, 44, 445, 45,
455 Analysis region
51, 52, 53, 531, 54, 55, 56, 57, 575, 581, 582, 583, 583a,
583b, 584, 585 Indication region
6 Pigment material
7 Uneven structure
81, 815, 821, 822, 823, 823a, 823b, 824, 825 Communication part
9 Reference frame
S Placement surface

## Claims

1. A microchip (1d) including:
an introduction part (2) configured to introduce a liquid;
a plurality of analysis regions (415, 425, 435, 445, 455) configured to perform an analysis of a substance contained in the liquid or a reaction product of the substance;
a plurality of indication regions (581, 582, 583, 584, 585) configured to indicate that the plurality of analysis regions have completely been filled with the liquid; and
a plurality of flow channels each comprising:
an introduction flow channel (311a, 312a, 313a, 314a, 315a) configured to connect the introduction part and at least one analysis region from among the plurality of analysis regions, and
a branch flow channel (321, 322, 323, 324, 325) configured to diverge from the introduction flow channel to be connected with a respective indication region from among the plurality of indication regions; and
a communication part (821, 822, 823, 824, 825) located between the branch flow channel and the introduction flow channel.

2. The microchip according to claim 1, wherein a pigment material is placed in each of the plurality of indication regions.

3. The microchip according to claim 2, wherein the pigment material is solid phased.

4. The microchip according to claim 1, wherein an uneven structure is provided on at least one surface of each of the plurality of indication regions.

5. The microchip according to claim 4, wherein the uneven structure formed on the at least one surface includes a surface which is not parallel or is not perpendicular to the at least one surface.

## Patentansprüche

1. Mikrochip (1d), welcher einschließt:
ein Einbringungsteil (2), das zum Einbringen einer Flüssigkeit ausgestaltet ist;
eine Vielzahl von Analyseregionen (415, 425, 435, 445, 455), die ausgestaltet sind, um eine Analyse einer Substanz, die in der Flüssigkeit enthalten ist, oder eines Reaktionsprodukts der Substanz durchzuführen;
eine Vielzahl von Anzeigeregionen (581, 582, 583, 584, 585), die ausgestaltet sind, um anzuzeigen, dass die Vielzahl der Analyseregionen vollständig mit der Flüssigkeit gefüllt worden sind; und
eine Vielzahl von Durchflusskanälen, die jeweils umfassen:
einen Einbringungsdurchflusskanal (311a, 312a, 313a, 314a, 315a), der ausgestaltet ist, um das Einbringungsteil und mindestens eine Analyseregion innerhalb der Vielzahl von Analyseregionen zu verbinden, und
einen Abzweigungsdurchflusskanal (321, 322, 323, 324, 325), der ausgestaltet ist, um sich von dem Einbringungsdurchflusskanal abzuteilen, um mit einer jeweiligen Anzeigeregion aus der Vielzahl von Anzeigeregionen verbunden zu werden; und
ein Kommunikationsteil (821, 822, 823, 824, 825), das sich zwischen dem Abzweigungsdurchflusskanal und dem Einbringungsdurchflusskanal befindet.

2. Mikrochip nach Anspruch 1, wobei ein Pigmentmaterial in jeder von der Vielzahl der Anzeigeregionen platziert worden ist.

3. Mikrochip nach Anspruch 2, wobei das Pigmentmaterial in einer festen Phase ist.

4. Mikrochip nach Anspruch 1, wobei auf mindestens einer Oberfläche von jeder von der Vielzahl der Anzeigeregionen eine ungleichförmige Struktur bereitgestellt wird.

5. Mikrochip nach Anspruch 4, wobei die ungleichförmige Struktur, die auf der mindestens einen Oberfläche gebildet ist, eine Oberfläche einschließt, die zu der mindestens einen Oberfläche nicht parallel ist oder nicht senkrecht ist.

## Revendications

1. Micropuce (1d) comportant :
une partie introduction (2) configurée pour introduire un liquide ;
une pluralité de régions d'analyse (415, 425, 435, 445, 455) configurées pour effectuer une analyse d'une substance contenue dans le liquide ou un produit de réaction de la substance ;
une pluralité de régions d'indication (581, 582, 583, 584, 585) configurées pour indiquer que la pluralité de régions d'analyse ont été entièrement remplies avec le liquide ; et
une pluralité de canaux d'écoulement comprenant chacun :
un canal d'écoulement d'introduction (311a, 312a, 313a, 314a, 315a) configuré pour raccorder la partie introduction et au moins une région d'analyse parmi la pluralité de régions d'analyse, et
un canal d'écoulement de ramification (321, 322, 323, 324, 325) configuré pour s'écarter du canal d'écoulement d'introduction pour être raccordé à une région d'indication respective parmi la pluralité de régions d'indication ; et
une partie communication (821, 822, 823, 824, 825) située entre le canal d'écoulement de ramification et le canal d'écoulement d'introduction.

2. Micropuce selon la revendication 1, dans laquelle un matériau pigmentaire est placé dans chacune de la pluralité de régions d'indication.

3. Micropuce selon la revendication 2, dans laquelle le matériau pigmentaire est en phase solide.

4. Micropuce selon la revendication 1, dans laquelle une structure irrégulière est disposée sur au moins une surface de chacune de la pluralité de régions d'indication.

5. Micropuce selon la revendication 4, dans laquelle la structure irrégulière formée sur l'au moins une surface comporte une surface qui n'est pas parallèle ou n'est pas perpendiculaire à l'au moins une surface.
